# EUROPEAN PATENT APPLICATION

(11) **EP 4 700 302 A1**
(43) Date of publication of application: **25.02.2026**
(21) Application number: 25197391.3
(22) Date of filing: 21.08.2025
(51) Int. Cl.: F24F 11/89, F24F 110/30

(54) **AIRFLOW MEASURING SYSTEM FOR A BUILDING HAVING A SENSOR ASSEMBLY MOUNTED TO A WALL OF AN AIR CONDUIT**

(30) Priority: 21.08.2024 US 202463685438 P
(71) Applicant: NJK Precision LLC, Eaton Rapids MI 48827 (US)
(72) Inventor: WOLGAMOTT, Nikolas, James, EATON RAPIDS, MI 48827 (US); HEIN, Kevin, P., EATON RAPIDS, MI 48827 (US)
(74) Representative: Cabinet Beau de Loménie

(57) **Abstract**

A mass airflow measuring system includes an air conduit and a sensor assembly including a first section (31) with inlet and outlet chambers and a wall separating the inlet and outlet chambers. A second section (32) has a third inlet chamber and fourth outlet chamber and a wall separating the third and fourth chambers. A third section (33) has a fifth chamber and a sixth chamber separated by a wall. The third section forms a conduit between said first and second sections. A first corner member (34) connects the first section to the third section and a second corner member (34) connects the second section to the third section to form a u-shaped assembly. Alternatively, L-shaped and horizontal configurations are also provided.

## Description

### CLAIM OF PRIORITY

This application claims priority to Provisional Patent Application Serial No. 63/685,438 filed on August 21, 2025, the entirety of which is hereby incorporated by reference and to which the skilled person can refer when considering the present disclosure.

### BACKGROUND OF THE DISCLOSURE

The present disclosure is directed to airflow measuring devices. More particularly, it is directed, but not limited to, a system and a method for measuring airflow in a building and which may also be used to measure airflow in industrial processes or in unconventional applications such as dirty filter detection, diffusers, or other placement challenged applications. The system may be used for mass airflow or volumetric airflow measuring.

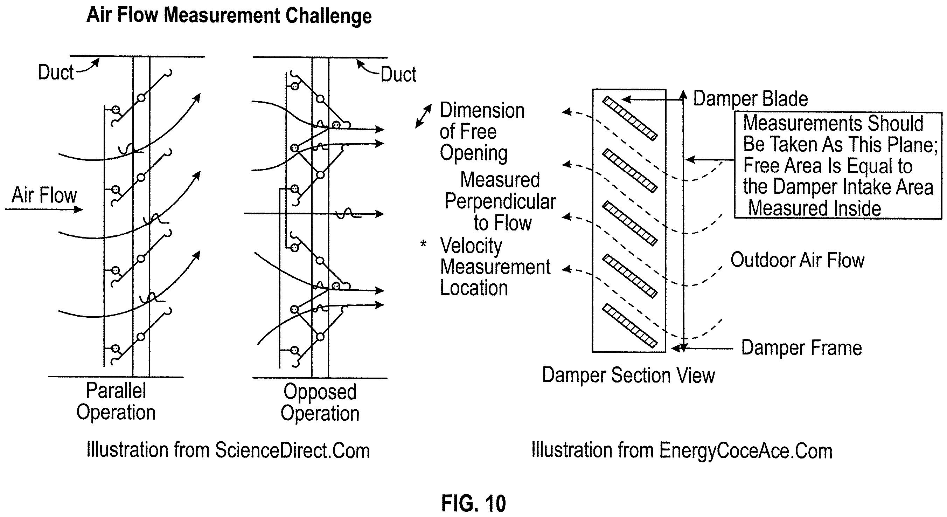

Controlling airflow in a building in regard to both volume and temperature is important for the comfort and wellbeing of the occupants of the building. Heating and cooling a building necessarily involves significant energy costs. Present techniques for monitoring and/or controlling airflow in a building employ airflow measuring devices having limitations on their accuracy and placement relative to obstructions such as dampers, louvers, radiators, etc., located either upstream or downstream of the device. These can impact the comfort of the building occupants, as well as the costs for heating and cooling the building. Referring to FIG. 10, the challenge of measuring air flow upstream or downstream of a damper with a parallel blade operation and/or an opposed blade operation is shown.

It would be desirable to provide a mass airflow measuring system, including a sensor assembly which is adapted to be placed in an air passageway, which system is more accurate than what is currently available. It would also be desirable to provide a mass airflow measuring system with components which are easily extruded and molded so as to create an inexpensive mass airflow measuring system.

### SUMMARY OF THE DISCLOSURE

In one embodiment, an airflow measuring system includes a sensor assembly adapted to be placed in an air conduit. The sensor assembly preferably comprises a U-shaped structure wherein a cross-section of a pair of vertically extending legs of the structure includes a pair of parallel, longitudinally extending channels separated by a wall. The first channel includes a first opening communicating with the main air passageway, to allow air flowing through the main air passageway to enter the first channel. The second channel is located downstream from the first channel and includes a second opening which communicates with the main air passageway to allow air to exit the second channel. A sample channel leads from the first channel to the second channel permitting air to flow from the first channel towards the second channel. A lower leg serves as a conduit between vertical legs. An airflow sensor communicates within the sample channel to receive airflow. The sensor is operative to output an airflow signal based on the airflow received by the airflow sensor. A processing unit receives the airflow signal from the airflow sensor and is operative to process the airflow signal and output a processed airflow signal.

In accordance with one aspect of the disclosure, an airflow measuring system has an air conduit; a sensor assembly mounted to the air conduit, including: a first section which includes in cross-section a first inlet chamber, a second outlet chamber, and a wall separating the first chamber from the second chamber; a second section which includes in cross section a third inlet chamber, a fourth outlet chamber and a wall separating the third chamber from the fourth chamber; a third section having a cross section a fifth chamber and a sixth chamber separated by a wall. The third section forms a conduit between the first and second sections. A first corner member connects the first section to the third section. A second corner member connects the second section to the third section. The first, second and third sections form a u-shaped assembly. A sensor housing is mounted to the third section, wherein the sensor housing includes an inlet opening communicating with the first channel of the third section and an exit opening communicating with the second channel of the third section; and an airflow sensor communicating with the sensor housing to receive airflow, wherein the airflow sensor outputs a signal based on the airflow received by the airflow sensor.

In accordance with another aspect of the disclosure, an airflow measuring system has an air conduit; a sensor assembly mounted to the air conduit, the sensor assembly including: a first sensor assembly and a second sensor assembly, wherein a first corner member of the first sensor assembly is connected to a corner member of the second sensor assembly to form a T-shaped connection between adjacent first and second sensor assemblies.

In accordance with another aspect of the disclosure, an airflow measuring system has a sensor assembly mounted to the air conduit, including: a first active airfoil section which comprises in cross-section a first inlet chamber, a second outlet chamber, and a wall separating the first chamber from the second chamber; a second inert airfoil section which comprises in cross section a third chamber and, a fourth chamber and a wall separating the third chamber from the fourth chamber; and a sensor housing mounted to said section, wherein the sensor housing includes an inlet opening communicating with the first chamber of the second section and an exit opening communicating with the second chamber of the second section; and an airflow sensor communicating with the sensor housing to receive airflow, wherein the airflow sensor outputs a signal based on the airflow received by the airflow sensor.

Still other aspects of the disclosure will become apparent upon a reading and understanding of the following detailed description.

### BRIEF DESCRIPTION OF THE DRAWINGS

The disclosure may take form in certain structures and components, several embodiments of which will be described in detail in this specification and illustrated in the accompanying drawings wherein:
FIG. 1 is schematic view of an HVAC system, such as for a building, with a variable air volume box to which is connected an airflow measuring system according to one embodiment of the present disclosure;
FIG. 2 is a perspective view of a portion of a U-shaped airflow measuring system according to one embodiment of the present disclosure;
FIG. 3 is an enlarged perspective view of a portion of the bottom horizontal leg or an inert airfoil of the airflow measuring system of FIG. 2;
FIG. 4 is an enlarged perspective view of a portion of a vertical venturi leg or an active airfoil of the airflow measuring system of FIG. 2;
FIG. 5 is an enlarged perspective view of a corner member of the airflow measuring system of FIG. 2;
FIG. 6 is a side elevational view of a system of a series of U-shaped assemblies and legs and corner members;
FIG. 7 is a perspective view of a portion of the mass airflow measuring system according to the present disclosure illustrating a sensor housing mounted to a venturi leg or section;
FIG. 8 is a bottom perspective view of the sensor housing of FIG. 7;
FIG. 9 is a schematic cross-sectional view through the sensor housing of FIG. 8; and
FIG. 10 is a schematic illustrating air flow management in a parallel blade damper operation and an opposed blade damper operation.
FIG. 11 illustrates a U-shaped assembly in accordance with an aspect of the disclosure.
FIG. 12 illustrates a wider U-shaped assembly in accordance with the disclosure.
FIG. 13 illustrates a series of U-shaped assemblies with multiple corner members and T-shaped couplers.
FIG. 14 illustrates a wider series of U-shaped assemblies with multiple corner members and T-shaped couplers.
FIG. 15 illustrates another series of U-shaped assemblies with corner members and T-shaped couplers.
FIG. 16 illustrates an L-shaped assembly with a corner member.
FIG. 17 illustrates an enlarged perspective view of a bottom leg an inert air foil without apertures on an upper surface.
FIG. 18 illustrates a lateral or horizontal arrangement of an inert air foil or leg and an active air foil or leg forming an airflow measuring system.
FIG. 19 is a perspective view of the disclosure used with a 7.5 Ton Roof Top Unit rain hood.
FIGS. 20A and 20B illustrate a perspective view of the disclosure used with a thin film sensor in a flow measuring module suspended immediately downstream of a damper in a plenum of an air handling unit.

### DETAILED DESCRIPTION OF THE PREFERRED EMBODIMENT

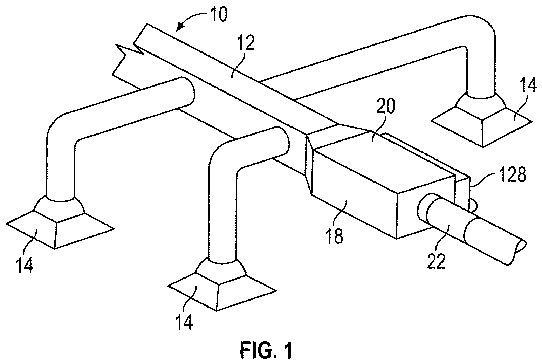

With reference to FIG. 1, an airflow measuring system according to the present disclosure can be employed in a building provided with a heating, ventilating and air conditioning (HVAC) system. The airflow measuring system can be used for mass airflow or volumetric air flow measurement. In one embodiment, such a building includes a building duct work system 10 comprising a central duct 12 and a plurality of air outflow ducts 14 which can, for example, lead to separate rooms in the building. Communicating with the central duct 12 is a variable air volume terminal unit 18 which can take the form of a box 20. Leading to box 20 is an inlet duct 22. Both the inlet duct 22 and the central duct 12, as well as the various air outflow ducts or diffusers 14, can in cross-section be round, rectangular, elliptical or assume any other conventional cross-sectional shape. Generally, however, at least the larger ducts are rectangular in cross-section.

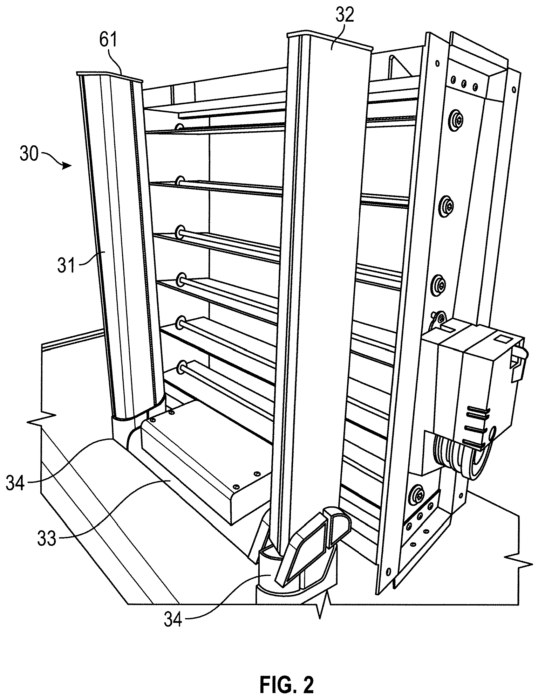

Positioned in the variable air volume terminal or in the inlet duct 22, or perhaps the air handling unit (not shown) is shown an airflow measuring system used for mass airflow measurement. With reference now to FIG. 2, in one embodiment, the airflow measuring system 30 can be U-shaped. The system can extend around the interior periphery of the air duct (or be placed in a non-duct opening (e.g. plenum or under a rain hood)) in which it is positioned or stationed so as to measure air flowing in the air duct past the assembly. It should be understood that all air flowing through the duct passes by the system 30. In this embodiment, the assembly can comprise two vertical and parallel active air foil or venturi sections or legs 31, 32 and a horizontal inert air foil or leg 33 extending between legs 31, 32 and two corner brackets or members 34 connecting legs 31,32 to leg 33. These are connected together and cooperate to define the U-shape frame type assembly. Of course, other designs are also conceivable. One advantage, however, of straight venturi legs, i.e., such that the section or leg extends along a straight linear axis, is that they can be extruded in a relatively straightforward manner from known materials, such as from a metal, for example aluminum, or from a suitable known thermoplastic material. Good tolerances can be maintained for the venturi legs during the extrusion process. Another benefit of extruding the venturi legs is that they can be cut to a desired custom length with less labor and equipment than the previously known construction methods for making the components of mass airflow sensor systems, and, hence, are less expensive to produce.

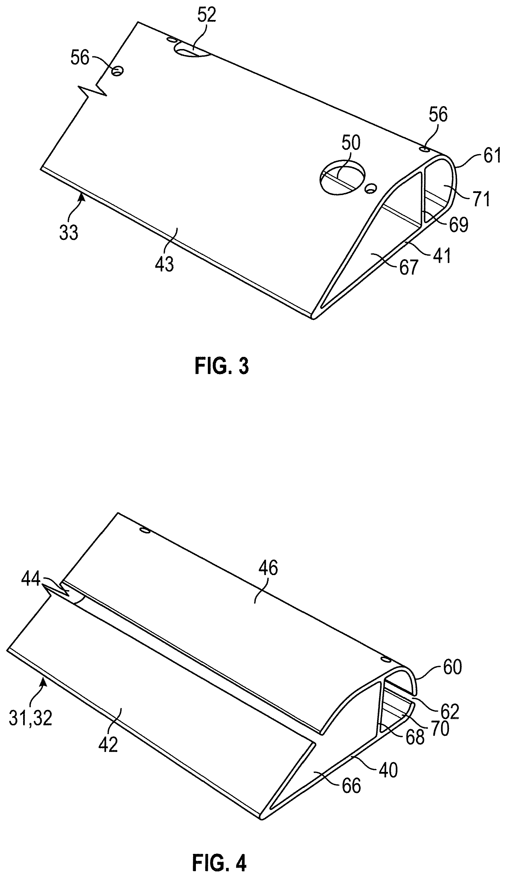

With reference now to FIG. 4, the venturi section or legs 31,32 can comprise a planar wall 40, as well as a relatively planar angled rear wall 42. Defined in the rear wall is a second slot or outlet slot 44. The top wall leads to a curved front wall 60 in which there is defined a first slot or inlet slot 62. Put another way, in this embodiment, an asymmetric airfoil type shape is defined in cross-section. The bottom wall 40 is flat, whereas the top wall, including sections 42, 46 and 60, defines a leading edge at which the front of the airfoil has a maximum curvature and a minimum radius and a trailing edge which is relatively sharp.

Defined within the venturi legs 31,32 is a first or inlet air chamber 70 which is spaced by a dividing wall 68 from a second or outlet air chamber 66. It should be appreciated that the dividing wall 68 is positioned beneath the top wall 46 and connects the top wall to the bottom wall 40. It should be appreciated that the dividing wall 68 is located at the point of maximum thickness in cross-section of the airfoil shaped venturi section or leg 32. A chord line of the airfoil shaped venturi section or legs 31,32 lies along the bottom wall 40. The maximum thickness of the section or legs 31,32 is located at the dividing wall 68. The dividing wall can extend axially along the length of the section 32 from one side edge thereof to the opposite side edge thereof, as is illustrated in FIG. 4. Due to the extruded nature of the venturi leg 32, fairly accurate dimensional stability can be obtained for the sizes of the first and second slots 62 and 44, as well as for the sizes of the respective air chambers 70 and 66 which are defined in the venturi leg or section 32.

The extrusion process is advantageous in order to maintain and control the width of the first and second slots 62 and 44, as well as the sizes and volumes of the first and second air chambers 70 and 66, which can also be termed channels. Control of slot width allows one to equalize the area for input and exhaust flows in the venturi leg 32. It should be appreciated from FIG. 4 that the venturi leg allows the creation of airfoil flow patterns over the inner surface of the venturi leg, i.e., the curved front wall 60, the relatively flat top wall 46 and the angled and planar back wall 42. These allow for a smooth airflow and minimal resistance and pressure drop in the air duct for air flowing past the several venturi legs 32 of the airflow measuring assembly 30.

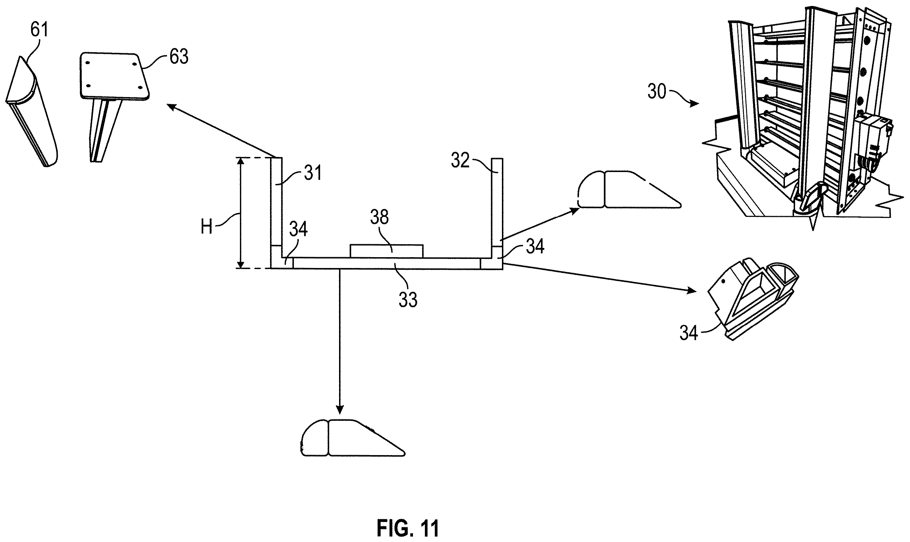

Referring to FIGS. 1 and 11, caps 61,63 are preferably added to the upper walls on legs 31,32 to seal the chambers 66,70.

Referring now to FIG. 3, with respect to the bottom horizontal leg 33, the leg has solid walls 43, 61 without the slots 44,62 shown in Figure 1. Also provided in relatively rounded top wall 43 are defined a pair of spaced openings 50 and 52 and openings 56. These can be located near opposite ends of wall 43. Thus, leg 33 serves as a conduit to two upper legs 31,32 of the U-shape (which have linear slots 44,62). Defined within the leg 33 is a first or inlet air chamber 71 which is spaced by a dividing wall 69 from a second or outlet air chamber 67. It should be appreciated that the dividing wall 69 is positioned beneath the top wall 43 and connects the top wall to the bottom wall 41. It should be appreciated that the dividing wall 69 is located at the point of maximum thickness in cross-section of the airfoil shaped venturi section or leg 33.

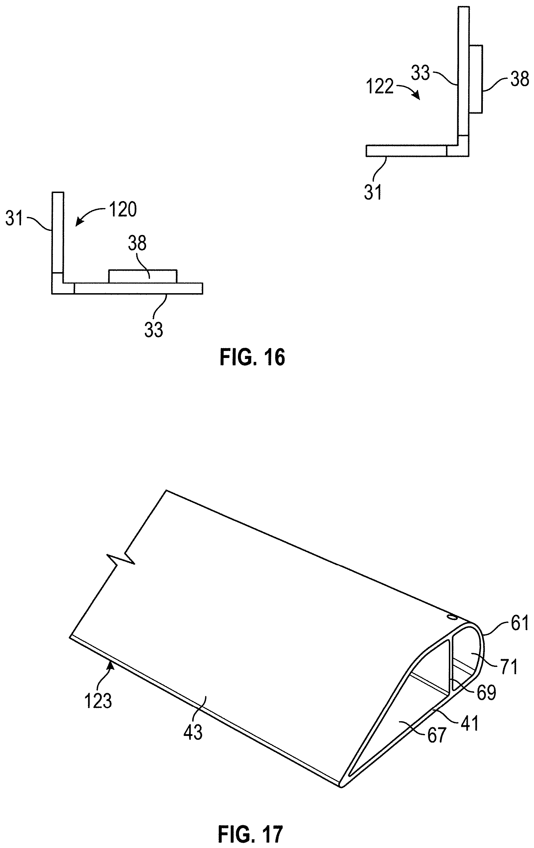

Referring to FIG. 17, bottom legs 123 are similar to the leg 33 but do not have apertures 50,52 and 56. Legs 123 vary in length and serve as dual chamber conduits.

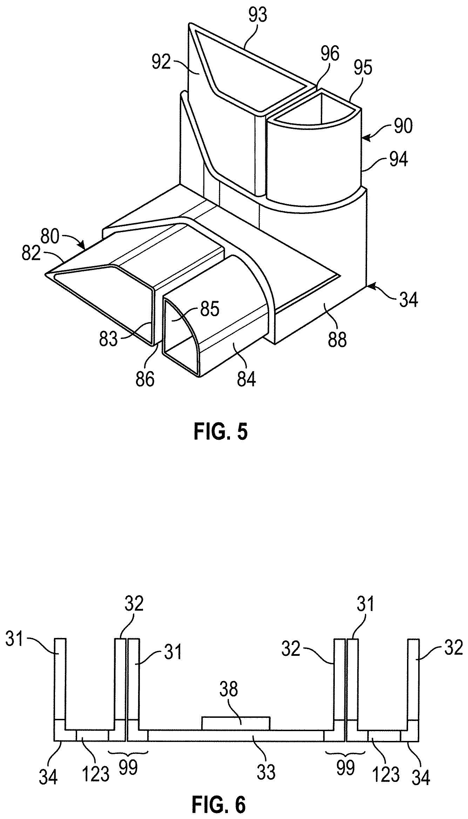

With reference now to FIG. 5, the corner member 34 used with the assembly comprises in one embodiment a first section 80 that includes a first leg 84, defined in which is a first channel 85, and spaced therefrom a second leg 82 defined in which is a second channel 83. It should be appreciated that the two legs 82 and 84 are spaced slightly apart by a slot 86. The legs 82 and 84 protrude from a base 88 and are aligned with each other. Extending from the base 88 is a direction generally normal or transverse to the direction of the first and second legs 84 and 82 is a second section 90 including a third leg 94, defined in which is a third channel 95, and a fourth leg 92, defined in which is a fourth channel 93. A slot 96 is located between the third and fourth legs 94 and 92.

In one embodiment, the corner member 34 can be die cast from a suitable metal such as aluminum or zinc. In another embodiment, the corner member 34 can be molded from a suitable known thermoplastic material, such as by injection molding. The corner member is designed with an airflow profile which matches the profiles of the venturi legs 31, 32, 33 and continues to the miter line of the corner. It should be apparent from a comparison of FIGS. 4 and 5 that a wall thickness of the venturi legs or sections 31, 32, 33 matches a height of a shoulder defined between the first and second legs 84 and 82 and the base 88. The same is true of the third and fourth legs 94 and 92 and the base. This promotes smooth airflow at the corners of the generally rectangular measuring system of this embodiment. In one embodiment, the corner member 34 provides a square 90-degree corner for assembly with the venturi legs 31, 32, 33. The corner member is advantageous for providing rigidity to limit the twist and distortion of the venturi legs or sections 31, 32, 33 during manufacture, transport and installation.

The legs of the corner member are designed to slip fit into the profile of the venturi legs so that when assembled, the corners and legs will create an assembly of square or rectangular configuration which is designed to fit the opening size in the air duct in which air flow is being measured. Modest leakage at slip fit joints can be reduced with addition of gaskets or sealant to tighten up the slip fit joints. It should be appreciated that geometrical configurations other than square or rectangular are also contemplated. For example, a rhomboidal shape, a trapezoidal shape or the like can be employed instead of rectangular or square shapes or configurations if the air duct in which the sensor is mounted requires such a shape. Thus, the corner members or sections can have first and second legs which are oriented at angles other than exactly perpendicular to the third and fourth legs. In other words, acute and obtuse angular relationships between the first and second legs on the one hand, and third and fourth legs on the other hand of the corner member are also contemplated if so required by the cross-sectional shape of the air duct in which the measuring system is mounted.

In one embodiment, the corner member is affixed to a venturi leg with a fastener (not shown) that is located in a slot of the venturi member so that it can be factory or field assembled. The fastener is removable so that the length of the venturi leg can be shortened in order to accommodate field installation issues. The several legs 82, 84, 92, 94 of the corner member can be engaged in the first and second air chambers and the corners can be affixed to the respective venturi legs with fasteners that can be located in a slot of the venturi legs. The legs are long enough that the respective fastener can be loosened, and the corner member moved somewhat away from its leg to slightly increase the overall size of the airflow measuring assembly 30.

It should be appreciated that the corner member has separate passages or channels 83 and 85 in a first section which do not communicate with each other but do communicate with the corresponding passages or channels 93 and 95 defined in a second section of the corner member 34. A respective passage or channel 83, 85, 93, 95 communicates with a respective one of the first and second chambers 66 and 70 of the adjacent venturi legs 31, 32, 33.

In one embodiment, the corner member can be die cast, while in another embodiment, it can be injection molded. The corner member can be constructed from a variety of materials, including aluminum, zinc, or a variety of thermoplastics.

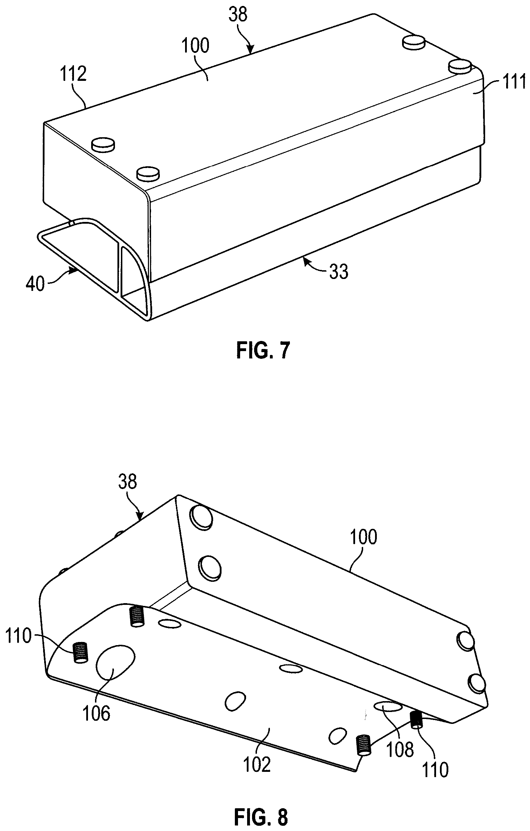

Referring now to FIG. 6, corner member 34 can be fastened together or welded together and machined to create passage through the two chambers. The corner shape then becomes a T-shaped coupler 99, which can be used to connect multiple U- shaped assemblies in series. Multiple legs 31,32 and horizontal legs 33 and 123 are connected by a series of corner member 34 and T-shaped couplers 99. Sensor housing 38 (Fig. 7) is centrally mounted on a horizontal leg 33. Alternately, the T-shaped coupler 99 may be fabricated as a single member or unit.

With reference now to FIG. 7, sensor housing 38 is mounted to a portion of one of the venturi legs 33. In the illustrated embodiment, the sensor housing 38 is mounted to an inside wall of the L-shaped assembly illustrated in FIG. 2 and more particularly to the curved top wall 46 of leg 33 of the mass airflow measuring assembly 30. Alternately, housing 38 can also be mounted on non-curved surface 40. (This orientation is shown in FIG. 16). It is contemplated that the application can also use an upside-down U-shaped assembly. The sensor housing includes a body 100 that is positioned over and mounted to the top wall 46 of the venturi leg 32 via suitable known fastening means. With reference now to FIG. 8, the body 100 comprises a curved bottom wall 102 which matches the curvature of the top wall 46 of the leg 33. Defined in the housing curved bottom wall 102 are spaced first and second openings 106 and 108. The first opening 106 in the body 100 communicates with the first opening 52 located in the top wall 46 of the leg 33 and the second opening 108 in the body communicates with the second opening 50 located in the top wall 46 of leg 33. Ideally, the diameters of the openings 50, 52, 106,108 are identical to promote smooth airflow.

The sensor housing 38 is calibrated to a standard that makes it removeable for cleaning or mounting to other units without the need for recalibration. The sensor housing 38 can deliver a digital signal such that recalibration is not necessary when attached to a wireless connection (such as Bluetooth^{®}) or cables of different lengths.

In one embodiment, located on opposite ends of the body 100 and spaced from each other are feet 110. These are meant to be accommodated in the corresponding openings or apertures 56 defined in the top wall 46 of the leg 33. The feet 110 can be secured in the openings or apertures 56 in any conventional manner, so that the body 100 does not become detached from the leg 33 in use.

It should be appreciated that the body 100 of sensor housing 38 is affixed to one of the venturi sections or legs in such a way as to be positioned within the air duct as illustrated in FIG. 6. While air flowing past that portion of the airflow measuring system will encounter more resistance due to the presence of the body than will air flowing past the other sections of the sensor assembly, the airflow is somewhat smoothed out by the fact that a leading edge 111 of the body 100 is curved so as to promote a smooth airflow, whereas a trailing edge 112 thereof is sharp. It should also be appreciated that the body 100 can be redesigned so as to be more airfoil-shaped as are the various sections or venturi legs 31,32, thereby promoting smoother airflow in the air duct.

The assembly can be manufactured separately from the several sections 31,32,33, 123 and corners 34 and T-shaped couplers 99. In this way, the assembly and the mass airflow sensor mounted thereto can be calibrated. Thus, the entire assembly does not need to be constructed and flow calibrated on site. Because the sensor modules are calibrated separately, the bodies 100 can be replaced without the need for removing and replacing the entire flow sensor assembly, including all of the sections of legs 31,32,33, 123 and corners 34 and T-shaped couplers 99.

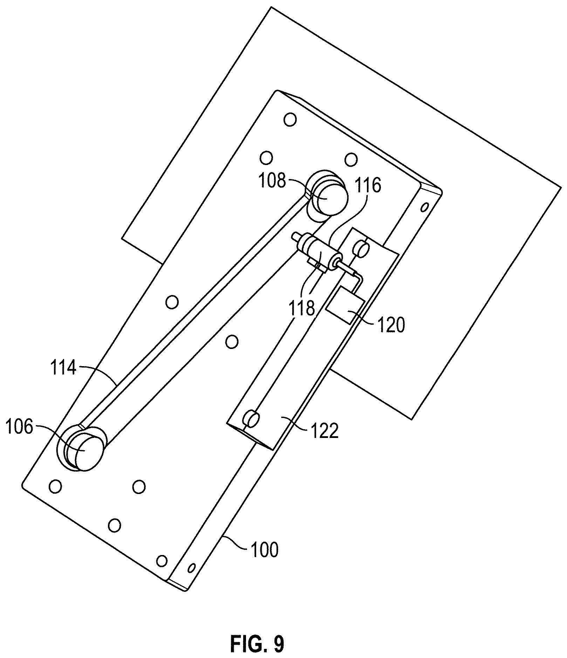

With reference now to FIG. 9, the apertures 106 and 108 are connected to each other via a sampling channel 114 that is defined within the body 100. Communicating with the sampling channel 114 is a cross slot 116. Positioned or located in the cross slot is a known mass airflow sensor 118. In one embodiment, the sensor 118 can be a thin film resistor sensor which employs thin film resistance temperature detectors in a bridge arrangement to measure air mass flow rate with minimal disruption of the flow. One embodiment of such a known thin film mass airflow sensor is illustrated in U.S. Pat. No. 6,684,695, the disclosure of which is incorporated by reference hereinto in its entirety.

Numerous suppliers and types of such sensors 118 are available, as is known to those knowledgeable in the art. Such sensors are available from, e.g., 1ST USA, 9516 West Flamingo Road, Suite 210, Las Vegas, Nev. 89147. Another vendor for such system is Honeywell and its ZEPHYR rM sensors which are available from Sensing and Control Automation and Control Solutions, 1985 Douglas Drive, North Golden Valley, Minn. 55422. The sensors provide rapid response to the air or gas flow and amount and direction in delivering a proportional output voltage with high accuracy.

In one embodiment, the sensor 118 can comprise a hot wire and a monitor measuring device which senses airflow and converts the sensed airflow to a voltage signal. Also provided is a processor unit or processing device 120 which is operatively connected to the sensor 118. In one embodiment, the processing device 120 can be located in a recessed area 122 of the housing or body 100. Of course, other locations for the processing device 120 are also contemplated. The processing device 120 receives the voltage signal from the airflow sensor 118 and outputs a control signal which can be utilized by the control system of the HVAC assembly of the building. For example, the output signal from the processing unit 120 can be provided to a direct digital control system 128 (FIG. 1) associated with the building HVAC system in order to monitor and optimize the performance of the building's HVAC system.

Referring to legs 31,32, a portion of the air flowing through the air duct will be drawn into chambers in legs 31,32 and connect to leg 33, passing through corners 34 and T-shaped couplers 99 when present. In leg 33, apertures 50, 52 then connect to channel 114 past sensor 118. The flow path of the air will then continue into the second chamber 66 and out through the second slot 44 back into the air duct. It should be appreciated that the first and second chambers 70 and 66 located in one venturi legs 31, 32 of the U-shaped frame-like airflow measuring assembly 30 communicate with the adjacent legs of the mass airflow measuring assembly via leg 33 and the corner members 34. More particularly, the first channel 70 of one venturi leg communicates with the first channel of an adjacent venturi leg via the first channel 85 in the first leg of the corner member and via the third channel 95 in the third leg 94 of that corner member with the first chamber in the adjacent venturi leg. Similarly, each of the first and second chambers 70 and 66 in each of the venturi legs communicates with the respective first and second chambers in the other venturi legs via the channels defined in the respective legs 84, 82, 94, 92 in each corner member 34. Thus, in this embodiment, U-shaped frame-like inlet chambers 70 and outlet chambers 66 are defined. But, the inlet chambers 70 and outlet chambers 66 of the various venturi legs are separated from each other and no airflow is allowed between the two chambers, except through the sample channel 114 defined in the housing of the body 100 which is mounted to one of the legs of the picture frame-like mass airflow measuring assembly 30.

It should be appreciated that the slots 44 and 62 can, in one embodiment, be continuous along an axial length of the venturi section or legs 31,32, as is illustrated in FIG. 4. Thus, the slots extend longitudinally from one side edge of the respective venturi leg 32 to the other side edge thereof. Only the dividing wall connects the bottom wall 40 to the upper section 42, 46, 60 of the venturi leg or section. One advantage of providing the longitudinally extending slots 44 and 62 employed in the venturi member 32 is that the slots allow a hook end of a known insulation strap (not shown) to grab and hold the venturi leg or member for ease of field installation of the measuring assembly in an air duct.

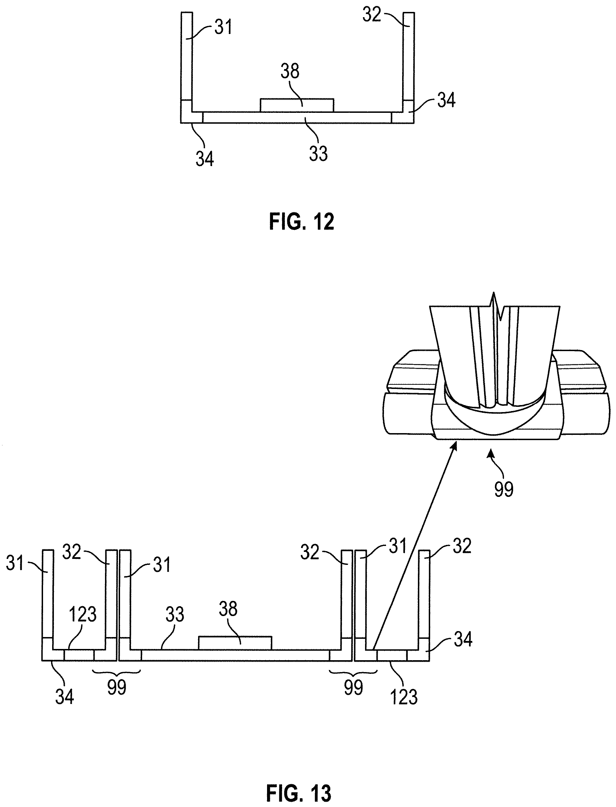

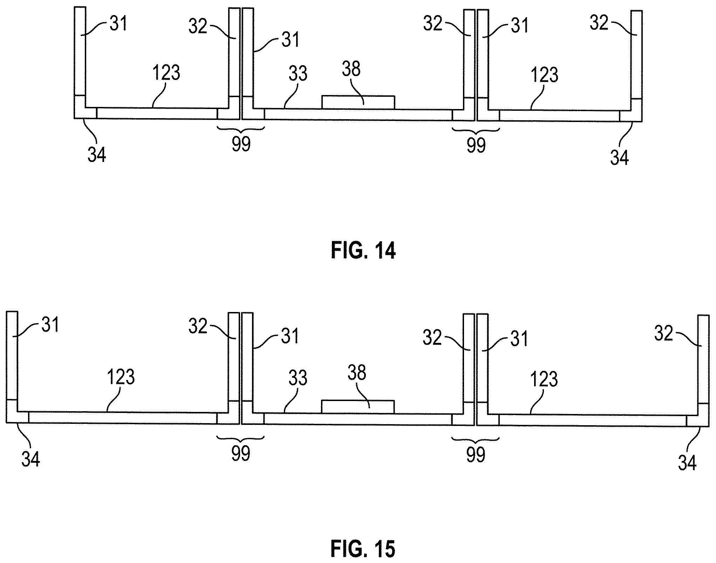

Referring to FIGS.11-16, various configurations of legs 31 ,32,33, 123, corner brackets 34 and T-shaped couplers 99 are shown. FIG. 11 shows a U-shaped configuration of legs 31,32,33 and brackets 34. End caps 61 can be the shape of the other end of the leg, or a flange configuration 63 for horizontal and vertical mounting. The end caps seal each individual chamber, thus maintaining respective pressures which are created as air flows over the airfoil shape. Respective pressures which are created as air flow over the airfoil shape. FIG .12 shows a bigger opening between legs 31 ,32. FIGS. 13-15 shows a series of U-shaped assemblies with corner brackets 34 and T-shaped couplers 99 with wider openings.

FIG. 16 shows another alternate embodiment showing an L-shaped configuration 120, 122.

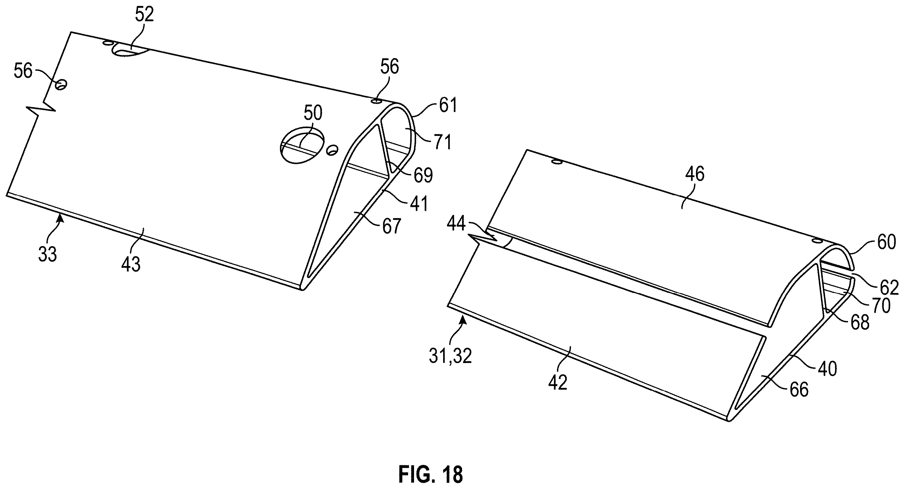

Referring to FIG. 18, a lateral or horizontal "I-shape" configuration of the inert air foil or leg as shown in FIG. 3 and the active air foil or leg as shown in FIG. 4 is shown. In this configuration the inert air foil 33 is placed in series or between two adjacent active air foils 31 and 32. The system operates in a similar manner to the U-shaped and L-shaped configurations where the sensor housing 38 is mounted to leg 33 and leg 33 serves as the inert air foil between active air foils 31 or 32.

In many applications, the central ducts in commercial HVAC settings for buildings are in the range of 24 inches by 12 inches in width and height respectively, thus providing a picture frame-type design or rectangular cross-section for the duct in question. Alternatively, however, the duct can have a relatively square design, such as 12 inches by 12 inches.

### Applications

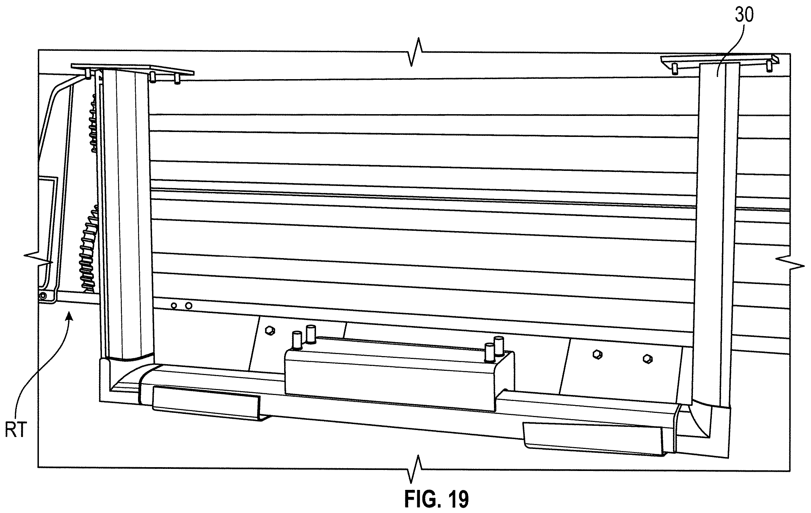

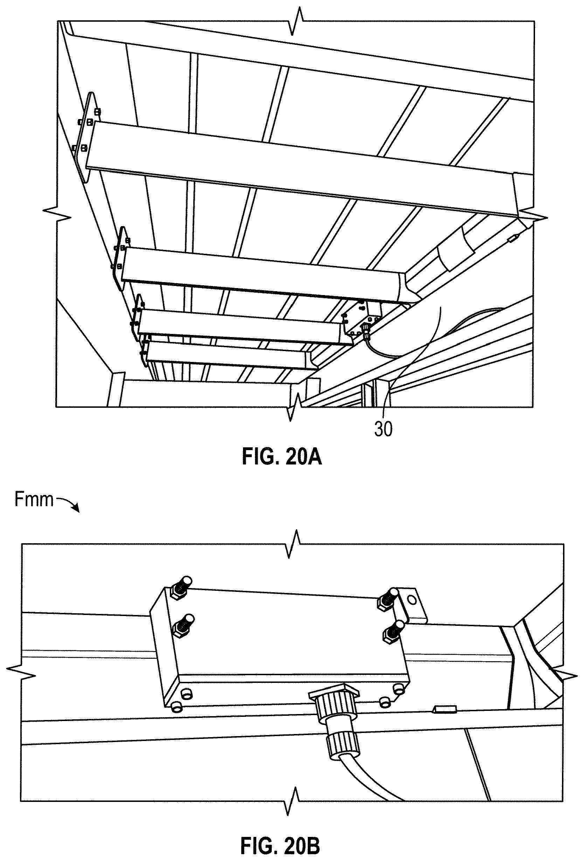

FIGS. 19 and 20A, 20B illustrate various applications of the sensor system. Other applications are also contemplated by the disclosure.

FIG. 19 shows the system 30 installed in a 7.5 ton Roof Top Unit (RTU) rain hood.

FIGS. 20A and 20B show the system 30 used with a thin film sensor located in a flow measure module.

Several exemplary embodiments of the instant disclosure have been described herein. Obviously, modifications and alterations will occur to others upon a reading and understanding of the preceding detailed description. It is intended that the embodiments be construed as including all such modifications and alterations insofar as they come within the scope of the description or the equivalents thereof.

## Claims

1. A sensor assembly mounted to the air conduit, including:
a first section (31) which comprises in cross-section a first inlet chamber (70), a second outlet chamber (66), and a wall (68) separating the first chamber from the second chamber;
a second section (32) which comprises in cross section a third inlet chamber (70), a fourth outlet chamber (66) and a wall (68) separating the third chamber from the fourth chamber;
a third section (33) comprising in cross section a fifth chamber (71) and a sixth chamber (67) separated by a wall (69), wherein said third section forms a conduit between said first and second sections;
a first corner member (34) connecting said first section to said third section;
a second corner member (34) connecting said second section to said third section;
wherein said first and second sections are substantially parallel to each other and perpendicular to said third section; the first and second corner sections (34) optionally comprising a thermoplastic material; the first, second and third sections (31,32,33) optionally comprising an extrusion,
a sensor housing (38) mounted to said third section (33), wherein the sensor housing includes an inlet opening communicating with the first channel of the third section and an exit opening communicating with the second channel of the third section; and
an airflow sensor (118) communicating with the sensor housing to receive airflow, wherein the airflow sensor outputs a signal based on the airflow received by the airflow sensor.

2. The assembly of claim 1 wherein said first corner member (34) comprises first and second legs (82,84) in which are defined first and second channels (83,85); and third and fourth legs (92,94) in which are defined third and fourth channels (93,95).

3. The assembly of claim 2, wherein said second corner member (34) comprises first and second legs (82,84) in which are defined first and second channels (83,85); and third and fourth legs (92,94) in which are defined third and fourth channels (93,95).

4. The assembly of claim 3, wherein said first corner member first leg first channel (83) and said first corner member second leg second channel (85) communicate with said fifth chamber and said sixth chamber of said third section (33).

5. The assembly of claim 4, wherein said first corner member third leg third channel (93) and said first corner member fourth leg fourth channel (95) communicate with one of said first section first inlet chamber and first section second outlet chamber.

6. The assembly of claim 5, wherein said second corner member first leg first channel (83) and said second corner member second leg second channel (85) communicate with said fifth chamber and said sixth chamber of said third section.

7. The assembly of claim 6, wherein said second corner member third leg third channel (93) and said second corner member fourth leg fourth channel (95) communicate with one of said second sections third inlet chamber and said second section fourth outlet chamber.

8. The assembly of any of claims 1 to 7, wherein said first section (31) includes a first slot (62) communicating with the first inlet chamber (70) of the first section and a second slot (44) communicating with the second outlet chamber (66) of the first section, the first and second slots (62,44) of the first section optionally extending across an entire length of the first section.

9. The assembly of any of claims 1 to 8, wherein said second section (32) includes a first slot (62) communicating with the third inlet chamber (70) of the second section and a second slot (44) communicating with the fourth outlet chamber (66) of the second section, the first and second slots (62,44) of the second section optionally extending across an entire length of the second section.

10. The assembly of any of claims 1 to 9, wherein the sensor assembly is mounted to an interior wall of the air conduit.

11. The assembly of any of claims 1 to 10, wherein each of the first, second and third section (31,32,33) is airfoil-shaped in cross-section including a rounded first portion and a tapered planar second portion.

12. The assembly of any of claims 1 to 11, wherein said third section (33) comprises at least one opening formed in the tapered planar section portion of said third section.

13. The assembly of any of claims 1 to 12, wherein said first, second and third sections (31,32,33) form a substantially U-shaped configuration.

14. The assembly of any of claims 1 to 13, wherein the first and second sections (31,32) each include a cap to seal the first inlet chamber, the second outlet chamber, the third inlet chamber and the fourth outlet chamber of the respective first and second sections.

15. The assembly of any of claims 1 to 14, wherein said sensor housing (38) is calibrated to a standard that makes it removeable for cleaning or mounting to other units without the need for recalibration.

16. The assembly of any of claims 1 to 15, wherein said sensor housing (38) delivers a digital signal such that recalibration is not necessary when attached to a wireless connection or cables of different lengths.

17. An airflow measuring system comprising:
an air conduit;
a sensor assembly mounted to the air conduit, the sensor assembly including:
a first sensor assembly according to any of claims 1 to 16, a second sensor assembly according to any of claims 1 to 16, wherein said first corner member of said first sensor assembly is connected to one of said first and second corner members of said second sensor assembly to form a T-shaped connection between adjacent first and second sensor assemblies.

18. The system of claim 17, wherein the second corner member (34) of said first sensor assembly is connected to one of said first and second corner members of said second sensor assembly to form a T-shaped connection between adjacent first and second sensor assemblies.

19. An airflow measuring system, comprising:
a sensor assembly mounted to the air conduit, including:
a first active airfoil section which comprises in cross-section a first inlet chamber, a second outlet chamber, and a wall separating the first chamber from the second chamber;
a second inert airfoil section which comprises in cross section a third chamber and, a fourth chamber and a wall separating the third chamber from the fourth chamber; and
a sensor housing mounted to said second section, wherein the sensor housing includes an inlet opening communicating with the first chamber of the second section and an exit opening communicating with the second chamber of the second section; and
an airflow sensor communicating with the sensor housing to receive airflow, wherein the airflow sensor outputs a signal based on the airflow received by the airflow sensor.

20. The system of claim 19, further comprising at least one corner member connecting said first section to said second section.
